# EUROPEAN PATENT SPECIFICATION

(11) **EP 1 293 730 B1**
(45) Date of publication and mention of the grant of the patent: **02.07.2008**
(21) Application number: 02256471.0
(22) Date of filing: 18.09.2002
(51) Int. Cl.: F23K 5/18, F23R 3/36

(54) **Safety device for a washing system for liquid fuel burners in gas turbines**
Sicherheitsvorrichtung für eine Spüleinrichtung für Flüssigbrennstoffbrenner in Gasturbinen
Dispositif de sécurité pour un système de lavage pour des brûleurs à combustible liquids dans des turbines à gaz

(30) Priority: 18.09.2001 IT MI20011949
(43) Date of publication of application: 19.03.2003
(73) Proprietor: Nuovo Pignone Holding S.P.A., 50127 Florence (IT)
(72) Inventor: Miliani, Alessio, 50024 Impruneta, Florence (IT); Segato, Fabio, 36031 Dueville, Vicenza (IT); Bennati, Laura, 500053 Empoli, Florence (IT)
(74) Representative: Pedder, James Cuthbert

(56) References cited:
- EP-A- 0 949 454
- DE-A- 3 916 477
- GB-A- 1 125 085
- US-A1- 2001 004 828

## Description

The present invention relates to a safety device for a washing system for liquid fuel injectors in gas turbines.

As is known, gas turbines comprise a compressor in which air obtained from the external environment is compressed. This compressed air passes into a series of combustion chambers which contain one or more burners, into each of which an injector feeds fuel which is mixed with the air in order to form a mixture of air and fuel to be burnt. Subsequently the burnt gases are conveyed to the turbine, which transforms the enthalpy of the gases burnt in the said combustion chamber into mechanical energy which is available to a user.

In particular, there exist gas turbines which function with "dual fuel", i.e. with two types of fuel, in other words liquid or gaseous. In this case the turbines are provided with separate injectors for combustion respectively of the gaseous or liquid fuel. When the turbine is functioning with gaseous fuel, the liquid fuel injector is not fed and therefore it becomes necessary to wash the injectors which are not being used with a flow of inert gas or air. This is in order to prevent intake of mixtures of air and fuel or burnt gases in cases in which there is not a perfect seal upstream from the injector. One such arrangement is shown in US2001/004828.

In addition, the continuous washing has a beneficial effect of cooling the injectors and eliminates any residual trace of liquid fuel which could cause problems. If in fact liquid fuel remains inside the burner, it could become carbonised owing to the effect of the high temperature and therefore block the injection holes of the injectors.

Advantageously, the continuous washing of the burners can be carried out with the air taken from the outlet of the axial compressor of the turbine, using the pressure difference between the compressor outlet and the interior of the combustion chamber. For this reason the washing is known as "passive", since use is made of the loss of pressure in the combustion chamber.

Additionally, the system for this washing must be provided with a protection device, so that when the burner is fed with the liquid fuel, the latter cannot flow back through the washing air feed pipe into the compressor discharge box, with the risk of self-ignition and consequent serious structural damage to the turbine.

At present the system is produced using a stop valve on the air feed line, through which a manifold which distributes the air to the various burners is fed. Each pipe which connects the air manifold to the various burners is then provided with a further stop valve, whereas at the lowest point of the manifold there is provided a drainage valve which is connected to an external system for collection of the drainage products.

When the turbine is functioning with gaseous fuel, the stop valve on the line for feeding air to the manifold and the stop valves on the burners are open, thus permitting washing of the burners. It will be appreciated that in this case the drainage valve remains closed.

On the other hand when the burner is fed with the liquid fuel, the stop valve on the air feed line, which for the sake of simplicity will also be called the feed valve, and the other stop valves, are closed, thus guaranteeing physical separation of the washing air obtained from the axial compressor, from the liquid fuel which is conveyed to the injectors. In this case the drainage valve is open. By this means any blow-by of liquid fuel caused by breakage or imperfect sealing of a valve is collected in the manifold and discharged from the drainage collection system. This system can also be provided with a visual pilot lamp or other type of signal to indicate the leakage.

However, if this type of system were subjected to substantial leakages of liquid fuel, it would not be possible to guarantee adequate protection against the risk of dangerous self-ignition.

The present invention thus seeks to eliminate the above-described disadvantages and in particular to provide a safety device for a washing system for liquid fuel injectors in gas turbines, which makes it possible to indicate the presence of leakages efficiently, directly on the control panel of the gas turbine.

The present invention further seeks to provide a safety device for a washing system for liquid fuel injectors in gas turbines, which is particularly reliable, simple and functional, and has relatively low costs.

According to the invention, there is provided a gas turbine having separate injectors for the combustion of liquid fuel or gaseous fuel and including a washing system for liquid fuel burners coming into use when gaseous fuel is used, the washing system comprising a feed pipe for washing gas, a manifold (14) from which liquid fuel is distributed to the burners, and a drainage pipe (26) in order to discharge any deposits of liquid, characterised in that, on the feed pipe (28, 30), there is inserted a closed tank in which there are provided apertures both for an intake pipe and for an outlet pipe for the washing gas, for the said drainage pipe and for at least two liquid level sensors.

Advantageously, this safety device for a washing system for liquid fuel injectors in gas turbines guarantees the collection of leakages or condensation inside the latter, independently from the characteristics of the system downstream.

The invention will now be described in greater detail, by way of example, with reference to the drawings, in which:-
Figure 1 is an operating diagram of a safety device according to the present invention, for a washing system for liquid fuel injectors in gas turbines; and
Figure 2 is a view in cross-section of a tank contained in the safety device in figure 1.

The figures show a safety device for a washing system for liquid fuel injectors in gas turbines, which is indicated as 10 as a whole.

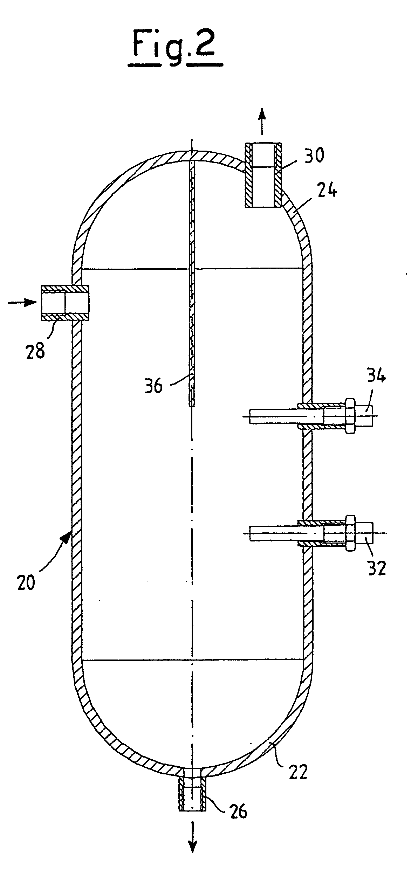

The device comprises a tank 20, which, in the non-limiting example illustrated in figure 2, has a cylindrical shape, is disposed with its axis vertically, and is

closed at both ends by a lower curved surface 22 and an upper curved surface 24. The lower surface 22 is provided with an aperture for a drainage pipe 26. Laterally on the tank 20 there is provided an aperture for an intake pipe 28 for air, whereas on the upper surface 24 or laterally on the tank 20 there is provided an aperture for an outlet pipe 30 for air. Again laterally on the tank 20 there are provided two apertures at different heights for a lower level sensor 32 and for an upper level sensor 34, which are connected to a control panel 18 for the turbine.

Inside the upper curved surface 24 of the tank 20 there is provided a flat divider baffle 36, which divides an upper area of the tank 20 into two. The intake pipe 28 is engaged opposite the baffle 36, whereas the outlet pipe 30 is engaged in an upper area of the tank 20, which, relative to the baffle 36, is in a position opposite that in which the pipe 28 enters. Advantageously, the upper sensor 34 is positioned just below a lower end of the divider baffle 36.

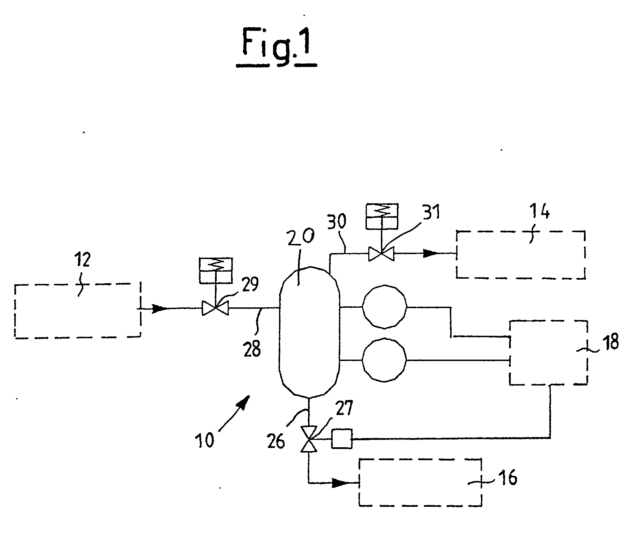

As can be seen in figure 1, on the intake pipe 28, outside the tank 20, there is provided a first stop valve 29 for washing air obtained from an axial compressor 12 of the gas turbine, whereas on the outlet pipe 30, again outside the tank 20, there is provided a second stop valve 31 for a manifold 14 which is connected to the liquid fuel injectors of the gas turbine.

Finally, on the drainage pipe 26, outside the tank 20, there is provided a third valve 27 for a drainage collection system 16.

The functioning of the safety device for a washing system according to the invention for liquid fuel injectors in gas turbines is apparent from the foregoing description provided with reference to the figures, and, briefly, is as follows ;-

Two stop valves 29 and 31 are disposed on the feed line for the washing air which feeds the manifold 14 for washing of the liquid fuel injectors. Between these two stop valves 29 and 31 there is provided a tank 20 to collect any drainage products and discharge them into a collection system 16 by means of the drainage valve 27. Liquid can be collected from inside the tank 20 both in the case in which there is blow-by of liquid fuel, and when there is gradual accumulation of condensation caused by the humidity of the air.

The two level sensors 32 and 34, which are positioned on two different levels, determine when liquid has gathered and transmit this fact to the turbine control panel 18. During the washing of the burners, if the lower sensor 32 indicates the presence of liquid, whether this is liquid fuel or condensation, the drainage valve 27 is opened by a command from the control panel 18 for a suitable period of time, such as to empty the tank 20. If this event re-occurs within a predetermined period of time, this indicates that there is a significant leakage of liquid fuel, such that the turbine is stopped by a command from the control panel 18. If on the other hand it is the upper sensor 34 which indicates the presence of liquid, this indicates that the tank 20 is almost completely full, such that the control panel 18 commands an emergency stoppage of the turbine.

On the other hand, if the washing is not active, i.e. if the stop valves 29 and 31 are closed and the drainage valve 27 is open, the tank 20 is permanently connected to the drainage collection system 16. In this condition it is impossible for condensation or liquid fuel to gather, unless there is a substantial leakage of fuel. In order to protect the turbine if the latter case occurs, if when the washing is not active one of the two sensors 32 and 34 indicates an increase in the level inside the tank 20, the turbine is stopped immediately by a command from the control panel 18.

Finally, suitable design factors, such as the presence of the divider baffle 36 in the tank 20 and the arrangement of the apertures for the intake 28 and outlet 30 pipes in opposite positions relative to the said divider baffle 36, prevent the liquid fuel from being able to rise in the intake pipe 28 by the effect of capillarity.

The description provided makes apparent the characteristics and corresponding advantages of the safety device which is the subject of the present invention, for a washing system for liquid fuel injectors in gas turbines. In this respect it should be noted that the embodiment proposed provides protection against any leakages of liquid fuel, both of a small extent, in which case the leakages are discharged to the drainage collection system, and of a large extent, in which case the fault is identified promptly by the control panel, and the turbine is stopped. In addition, the design characteristics of the tank guarantee collection of leakages or condensation inside the latter, irrespective of the characteristics of the washing system downstream, which must simply be provided with a continuous slope towards the tank itself.

Another advantage of the device is its capacity to be able to indicate the presence of leakages automatically, directly to the turbine control panel, which will be able to undertake the most appropriate corrective or preventative actions.

Finally, the arrangement of the two sensors on different levels also permits implementation of control logic for the functioning of the sensors. For example, if only the upper sensor indicates the presence of liquid, at least one of the two sensors is not functioning correctly.

## Claims

1. A gas turbine having separate injectors for the combustion of liquid fuel or gaseous fuel and including a washing system for liquid fuel burners coming into use when gaseous fuel is used, the washing system comprising a feed pipe (28, 30) for washing gas, a manifold (14) from which liquid fuel is distributed to the burners, and a drainage pipe (26) in order to discharge any deposits of liquid, **characterised in that**, on the feed pipe (28, 30), there is inserted a closed tank (20) in which there are provided apertures both for an intake pipe (28) and for an outlet pipe (30) for the washing gas, for the said drainage pipe (26) and for at least two liquid level sensors (32, 34).

2. A gas turbine according to claim 1, **characterised in that** the apertures of the said level sensors (32, 34) are positioned at different heights above the aperture of the drainage pipe (26).

3. A gas turbine according to claim 1 or 2, **characterised in that** the said tank (20) has a cylindrical shape, is disposed with its axis vertically, and is closed at both ends by a lower surface (22) in which the said drainage pipe (26) engages, and by an upper surface (24), the apertures for the said intake pipe (28) and for the said outlet pipe (30) being provided in the said upper surface (24) or in the cylindrical surface of the tank (20), the apertures for the said level sensors (32, 34) being provided in the cylindrical surface of the tank (20).

4. A gas turbine according to claim 1, 2 or 3, **characterised in that** on the said intake pipe (28), outside the tank (20), a first stop valve (29) is provided, **in that** on the said outlet pipe (30), outside the tank (20), a second stop valve (31) is provided, and **in that** on the said drainage pipe (26), outside the tank (20), a third stop valve (27) is provided, wherein the said valves are actuated according to commands given by a control panel (18) for the gas turbine, in which the information obtained from the said level sensors (32, 34) is also processed.

5. A gas turbine according to any preceding claim, **characterised in that**, inside the upper surface (24) of the tank 20, there is provided a flat divider baffle (36), which divides an upper area of the tank (20) into two parts.

6. A gas turbine according to claim 5, **characterised in that** the aperture of the said intake pipe (28) is opposite the baffle (36), whereas the aperture of the said outlet pipe (30) is in the part of the upper area of the tank (20) opposite that in which the aperture of the pipe (28) is provided.

7. A gas turbine according to claim 6, **characterised in that** the said level sensor (34) is positioned just below a lower end of the divider baffle (36), the said sensor (34) being above the said second sensor (32).

8. A gas turbine according to any preceding claim, **characterised in that** the said washing gas is inert gas.

9. A gas turbine according to any one of claims 1 to 8, **characterised in that** the said washing gas is air obtained from an axial compressor (12) of the gas turbine.

10. A gas turbine according to any preceding claim, **characterised in that** any said excess liquids consist of condensation and/or liquid fuel.

## Patentansprüche

1. Gasturbine mit separaten Injektoren für die Verbrennung von Flüssigbrennstoff oder gasförmigem Brennstoff und einer Spüleinrichtung für Flüssigbrennstoffbrenner, die bei der Verwendung von gasförmigem Brennstoff zum Einsatz kommt, wobei die Spüleinrichtung eine Zuleitung (28, 30) für Spülgas, einen Verteiler (14), von dem Flüssigbrennstoff zu den Brennern verteilt wird, und eine Abflussleitung (26) umfasst, um Flüssigkeitsablagerungen abzulassen, **dadurch gekennzeichnet, dass** in der Zuleitung (28, 30) ein verschlossener Tank (20) eingesetzt ist, in dem Öffnungen sowohl für ein Saugrohr (28) als auch für ein Ablassrohr (30) für das Spülgas, für die Abflussleitung (26) und für zumindest zwei Füllstandssensoren (32, 34) vorgesehen sind.

2. Gasturbine nach Anspruch 1, **dadurch gekennzeichnet, dass** die Öffnungen der Füllstandssensoren (32, 34) in unterschiedlichen Höhen über der Öffnung der Abflussleitung (26) angeordnet sind.

3. Gasturbine nach Anspruch 1 und 2, **dadurch gekennzeichnet, dass** der Tank (20) zylinderförmig, mit vertikal ausgerichteter Achse angeordnet und an beiden Enden durch eine untere Fläche (22), in die die Abflussleitung (26) eingreift, und durch eine obere Fläche (24) verschlossen ist, wobei die Öffnungen für das Saugrohr (28) und das Ablassrohr (30) in der oberen Fläche (24) oder in der zylinderförmigen Oberfläche des Tanks (20) vorgesehen sind, und wobei die Öffnungen für die Füllstandssensoren (32, 34) in der zylinderförmigen Oberfläche des Tanks (20) vorgesehen sind.

4. Gasturbine nach Anspruch 1, 2 oder 3, **dadurch gekennzeichnet, dass** in dem Saugrohr (28), außerhalb des Tanks (20), ein erstes Absperrventil (29) vorgesehen ist, und dass in dem Ablassrohr (30), außerhalb des Tanks (20), ein zweites Absperrventil (31) vorgesehen ist, und dass auf der Abflussleitung (26), außerhalb des Tanks (20), ein drittes Absperrventil (27) vorgesehen ist, wobei die Ventile gemäß den von einem Bedienfeld (18) der Gasturbine, wo auch die von den Füllstandssensoren (32, 34) erhaltenen Daten verarbeitet werden, gegebenen Anweisungen betätigt werden.

5. Gasturbine nach einem der vorhergehenden Ansprüche, **dadurch gekennzeichnet, dass** innerhalb der oberen Oberfläche (24) des Tanks (20) eine flache Trennwand (36) vorgesehen ist, die einen oberen Bereich des Tanks (20) in zwei Teile teilt.

6. Gasturbine nach Anspruch 5, **dadurch gekennzeichnet, dass** die Öffnung des Saugrohrs (28) der Trennwand (36) gegenüberliegt, während die Öffnung des Ablassrohrs (30) sich in dem Teil des oberen Bereichs des Tanks (20) befindet, die dem Teil, in dem sich die Öffnung des Saugrohrs (28) befindet, gegenüberliegt.

7. Gasturbine nach Anspruch 6, **dadurch gekennzeichnet, dass** der Füllstandssensor (34) direkt unterhalb eines unteren Endes der Trennwand (36) angeordnet ist, wobei der Sensor (34) sich über dem zweiten Sensor (32) befindet.

8. Gasturbine nach einem der vorhergehenden Ansprüche, **dadurch gekennzeichnet, dass** das Spülgas ein Edelgas ist.

9. Gasturbine nach einem der Ansprüche 1 - 8, **dadurch gekennzeichnet, dass** das Spülgas von einem Axialverdichter (12) der Gasturbine stammende Luft ist.

10. Gasturbine nach einem der vorhergehenden Ansprüche, **dadurch gekennzeichnet, dass** alle überschüssigen Flüssigkeiten aus Kondensat und/oder Flüssigbrennstoff bestehen.

## Revendications

1. Turbine à gaz ayant des injecteurs séparés pour la combustion d'un combustible liquide ou d'un combustible gazeux et comprenant un système de lavage pour brûleurs de combustible liquide venant à être utilisés quand un combustible gazeux est utilisé, le système de lavage comprenant une conduite d'alimentation (28, 30) pour laver du gaz, un collecteur (14) à partir duquel le combustible liquide est distribué aux brûleurs, et un tuyau de drainage (26) de façon à évacuer tous dépôts de liquide, **caractérisée en ce que**, sur la conduite d'alimentation (28, 30) est inséré un réservoir fermé (20) dans lequel des ouvertures sont ménagées aussi bien pour un tuyau d'admission (28) que pour un tuyau de sortie (30) pour le gaz de lavage, pour ledit tuyau de drainage (26) et pour au moins deux détecteurs (32, 34) de niveau de liquide.

2. Turbine à gaz selon la revendication 1, **caractérisée en ce que** les ouvertures desdits détecteurs (32, 34) de niveau sont positionnées à des hauteurs différentes au-dessus de l'ouverture du tuyau de drainage (26).

3. Turbine à gaz selon la revendication 1 ou 2, **caractérisée en ce que** ledit réservoir (20) a une forme cylindrique, est agencé avec son axe dans le sens vertical, et est fermé aux deux extrémités par une surface inférieure (22) dans laquelle ledit tuyau de drainage (26) s'engage, et par une surface supérieure (24), les ouvertures pour ledit tuyau d'admission (28) et pour ledit tuyau de sortie (30) étant prévues dans ladite surface supérieure (24) ou dans la surface cylindrique du réservoir (20), les ouvertures pour lesdits détecteurs (32, 34) de niveau étant prévues dans la surface cylindrique du réservoir (20).

4. Turbine à gaz selon la revendication 1, 2 ou 3, **caractérisée en ce que** sur ledit tuyau d'admission (28), à l'extérieur du réservoir (20), il y a une première vanne d'arrêt (29), **en ce que** sur ledit tuyau de sortie (30), à l'extérieur du réservoir (20), il y a une deuxième vanne d'arrêt (31), et **en ce que** sur ledit tuyau de drainage (26), à l'extérieur du réservoir (20), il y a une troisième vanne d'arrêt (27), dans laquelle lesdites vannes sont mises en action selon les instructions données par un panneau de commande (18) pour la turbine à gaz, dans lequel les informations obtenues à partir desdits détecteurs de niveau (32, 34) sont également traitées.

5. Turbine à gaz selon l'une quelconque des revendications précédentes, **caractérisée en ce que**, à l'intérieur de la surface supérieure (24) du réservoir 20, il y a une chicane de division plate (36), qui divise une zone supérieure du réservoir (20) en deux parties.

6. Turbine à gaz selon la revendication 5, **caractérisée en ce que** l'ouverture dudit tuyau d'admission (28) est opposé à la chicane (36), tandis que l'ouverture dudit tuyau de sortie (30) est dans la partie de la zone supérieure du réservoir (20) à l'opposée de celle dans laquelle l'ouverture du tuyau (28) est prévue.

7. Turbine à gaz selon la revendication 6, **caractérisée en ce que** ledit détecteur (34) de niveau est positionné juste en-dessous d'une extrémité inférieure de la chicane de division (36), ledit détecteur (34) étant au-dessus dudit second détecteur (32).

8. Turbine à gaz selon l'une quelconque des revendications précédentes, **caractérisée en ce que** ledit gaz de lavage est du gaz inerte.

9. Turbine à gaz selon l'une quelconque des revendications 1 à 8, **caractérisée en ce que** ledit gaz de lavage est de l'air obtenu en provenance d'un compresseur axial (12) de la turbine à gaz.

10. Turbine à gaz selon l'une quelconque revendication précédente, **caractérisée en ce que** lesdites quantités de liquide excédentaires sont constituées par de la condensation et/ou un combustible liquide.
